# EUROPEAN PATENT SPECIFICATION

(11) **EP 4 462 240 B1**
(45) Date of publication and mention of the grant of the patent: **04.03.2026**
(21) Application number: 24174656.9
(22) Date of filing: 07.05.2024
(51) Int. Cl.: G06F 3/0486, G06Q 10/087, G06Q 10/063, G06Q 10/08, G06Q 50/04

(54) **USER INTERFACE-BASED STORAGE MANAGEMENT**
AUF BENUTZERSCHNITTSTELLE BASIERENDE SPEICHERVERWALTUNG
GESTION DE STOCKAGE BASÉE SUR UNE INTERFACE UTILISATEUR

(30) Priority: 11.05.2023 US 202318315876
(43) Date of publication of application: 13.11.2024
(73) Proprietor: SAP SE, 69190 Walldorf (DE)
(72) Inventor: ROEDEL, Bernd, D-69190 Walldorf (DE); HUELS, Steffen, D-69190 Walldorf (DE); BIERBACH, Stefanie, D-69190 Walldorf (DE); BUNZ, Katrin, D-69190 Walldorf (DE); ESSER, Johannes, D-69190 Walldorf (DE)
(74) Representative: DeltaPatents B.V.

(56) References cited:
- JP-A- 2015 014 897
- US-A1- 2010 262 453
- US-A1- 2013 211 977

## Description

### BACKGROUND

At a plant or other location, materials may be spread among multiple storage locations. For example, an automobile plant may have five different locations where steel is stored. Over time, quantities of the steel may move, be replenished, be depleted, and the like. Keeping track of the movement of materials around a plant, warehouse, manufacturer, distributor, or the like, is often a tedious task that is performed by a user. For example, the user may keep spreadsheets or other documents which they can manually enter data into to keep track of the movement of inventory. As another example, a computer may receive a list of movements in the form of a log or other document which includes manually-entered movements of inventory. As a result, inventory data is often error prone and unreliable. US 2010/262453 A1 discloses an interactive hierarchical inbound shipment order configuration tool that enables merchants to configure shipments consisting of products, containers, and transportation levels. It provides drag-and-drop GUI operations to build shipment hierarchies, generates packing lists, graphical representations, and step-by-step warehouse handling instructions, and integrates with warehouse and merchant portals.

### BRIEF DESCRIPTION OF THE DRAWINGS

Features and advantages of the example embodiments, and the manner in which the same are accomplished, will become more readily apparent with reference to the following detailed description taken in conjunction with the accompanying drawings.
FIG. 1 is a diagram illustrating a computing environment for managing inventory in accordance with an example embodiment.
FIGS. 2A-2F are diagrams illustrating processes of managing inventory based on user interface interactions in accordance with example embodiments.
FIG. 3 is a diagram illustrating a method of managing inventory based on user interface interaction in accordance with an example embodiment.
FIG. 4 is a diagram illustrating a computing system for use in the examples herein in accordance with an example embodiment.

Throughout the drawings and the detailed description, unless otherwise described, the same drawing reference numerals will be understood to refer to the same elements, features, and structures. The relative size and depiction of these elements may be exaggerated or adjusted for clarity, illustration, and/or convenience.

### DETAILED DESCRIPTION

In the following description, specific details are set forth in order to provide a thorough understanding of the various example embodiments. It should be appreciated that various modifications to the embodiments will be readily apparent to those skilled in the art, and the generic principles defined herein may be applied to other embodiments and applications without departing from the scope of the disclosure. Moreover, in the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. Thus, the present disclosure is not intended to be limited to the embodiments shown but is to be accorded the widest scope consistent with the principles and features disclosed herein. The scope of the invention is defined by the appended claims.

The example embodiments overcome the drawbacks of the related art by integrating inventory management into a software application which "gamifies" the process of managing inventory of product, items, etc. among different storage locations. The software provides a user interface in which a user can move inventory stock between storage locations in a game-like interaction with the user interface such as moving pieces on a board using a drag-and-drop operation or the like. For example, the storage locations may be represented on a user interface (such as within a page(s) of the inventory management software application) with interactive graphical user interface (GUI) elements such as icons, images, shapes, characters, symbols, numbers, and the like. Furthermore, the GUI elements may be interactive and may be moved by a user command such as a user placing a cursor (e.g., via a mouse, finger, stylus, etc.) over a first GUI element and dragging it towards a second GUI element.

For example, the system may detect a request to change inventory from a storage location corresponding to the first GUI element to a storage location corresponding to the second GUI element. The request may be captured based on interactions with movable pieces / GUI elements on the user interface and results of which may be stored in a cart-like storage queue where it awaits with any other requests that are captured during the same session. The user may visit the cart and accept the changes or decline to accept the changes. When accepted, the software system may transmit a call to a database or other data store with an instruction to modify data records therein to align with the requested changes.

In some embodiments, each of the GUI elements may be identical in appearance, at least to start with. As an example, the GUI elements may be icons. In this example, each of the GUI elements may display the same icon having the same shape, size, color, design, etc. as the other GUI elements. As another example, the GUI elements may be characters. In this example, each of the GUI elements may display the same character with the same shape, size, color, etc. When a GUI element is selected, the appearance of the GUI element may be changed to distinguish it from the other GUI elements within the user interface that have not been selected. For example, the system may change a color, a size, a shape, a shading, a highlighting, or the like of the GUI element to indicate that it has been selected. Furthermore, the GUI element may stick with the cursor as the user moves the GUI element towards the second GUI element.

By integrating inventory management into a game-like system with movable pieces that can be similar to chess pieces or other games, the inventory management process becomes more user friendly and it also becomes automated because the users do not have to enter commands or make changes on their own to the database. Instead, the users can simply move GUI elements on the screen and enter quantity values to affect the same changes in the database. Logic within the management application can generate modifications to underlying database content including tables, columns, rows, and the like, based on inputs detected via the user interface. For example, movement of piece on the screen towards another piece on the screen may be detected and analyzed to identify what storage location corresponds to the piece that is moved, and what storage location corresponds to the other piece that the moving piece if being brought towards. In this case, the logic may detect when the moving piece has entered a predetermined area, radius, diameter, etc. of the other piece, and in response, generate the underlying database command for modifying the inventory data.

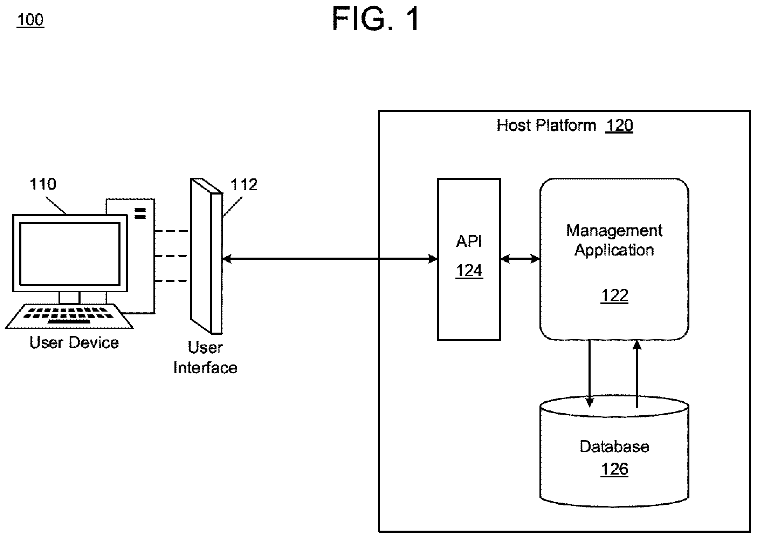

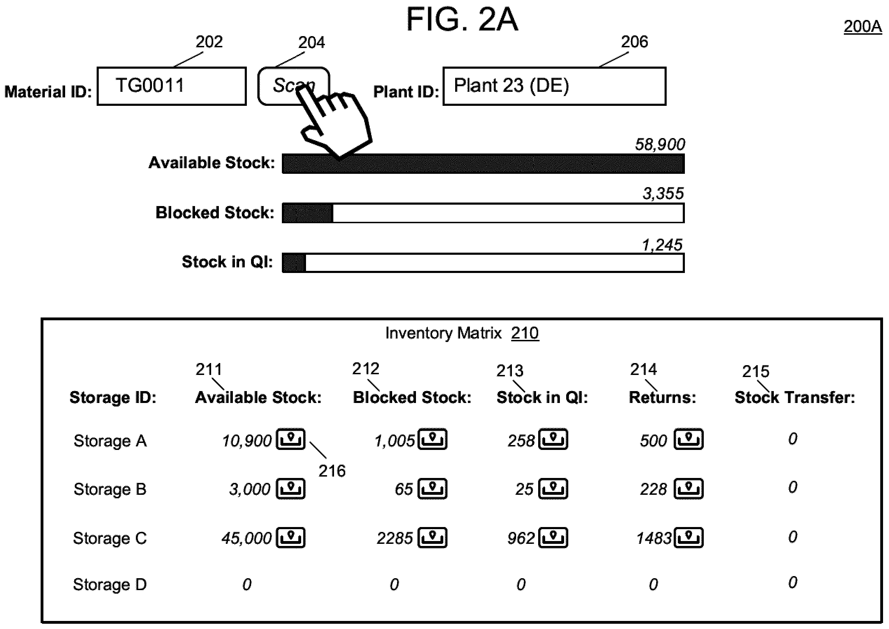

FIG. 1 illustrates a computing environment 100 for managing inventory in accordance with an example embodiment. Referring to FIG. 1, a host platform 120 such as a web server, a cloud platform, a database, a combination of devices and/or systems, and the like, may host a software application such as management application 122 which may manage inventory data of an organization, plant, company, etc. The management application 122 may generate and output the user interfaces that are shown in FIGS. 2A-2F.

According to various embodiments, the management application 122 may include logic that can read, write / insert, modify, delete, etc., inventory data that is stored within a database 126 based on interactions with GUI objects displayed on the user interfaces output by the management application 122. For example, the management application 122 may generate and execute commands such as structured query language (SQL) commands to carry out the logic and perform any of the commands. The SQL commands that are executed by the management application 122 may include any of SELECT, UPDATE, DELETE, INSERT INTO, CREATE TABLE, CREATE DATABASE, ALTER DATABASE, and the like. Furthermore, the management application 122 may include a script or other software process that can execute the commands and send the commands to the database 126 via an API or other communication mechanism of the database 126.

The management application 122 may also output a user interface 112 that can be rendered on a screen of a user device 110. For example, the user device 110 may connect to the host platform 120 via a network such as the Internet, and may download or otherwise receive the user interface 112 from the host platform. In some embodiments, the user interface 112 may be included in a web application such as a progressive web application (PWA) that is downloaded from the host platform 120. As another example, the user interface 112 may be part of a front-end of a software application that is installed on the user device 110.

In these examples, a web session may be established between the user device 110 and the management application 122 by a user registering, logging in, signing in, or the like, with the management application 122. For example, an application programming interface (API) 124 may control access to the management application 122. To gain access, the user may input a username and password or other credentials into the user interface 112 of the management application 122. The management application 122 may store a list of verified users and compare the credentials to the list to validate the user. If authorized, the user may gain access to the management application 122 and the underlying data stored in the database 126.

Once the user device 110 gains access to the management application 122, the user may navigate to pages within the management application 122 which output the user interfaces shown in FIGS. 2A-2F. For example, FIG. 2A illustrates a user interface 200A for managing inventory among storage locations that store the inventory. Referring to FIG. 2A, a user may input a material identifier into a field 202 and/or a plant identifier in a field 206 and press a scan button 204 which causes the management application 122 to read current quantity values of inventory that matches the search / scan criteria stored at the different storage locations. For example, the management application 122 may extract data from an underlying database such as the database 126 shown in FIG. 1. Here, the management application 122 may query the database via SQL or some other language to obtain the current quantity values. During this process, the management application 122 may use a combination of inputs from the user interface (movement of game pieces) in combination with a quantity value entered on the user interface, to generate an SQL command for modifying inventory values of a product based on a sequence of the inputs (*i.e.,* from location A to location B) and based on a value of the quantity value.

According to various embodiments, the software may provide the quantity values at the different storage locations via a matrix 210 with movable pieces therein. In this example, the matrix is two-dimensional with storage location on one dimension and stock type on the other dimension. Thus, the user is able to move a stock of material between different storage locations as well as between different stocks of the material at a same storage location.

For example, the software may render the matrix 210 with a two-dimensional array of current quantity values read from the database. A first dimension of the matrix 210 may correspond to storage location identifiers, and a second dimension of the matrix 210 may correspond to different stocks / piles of the inventory at each of the storage locations. For example, the different "stocks" of the material at a same storage location may include a quantity of an available stock in a column 211, a quantity of a blocked stock in column 212, a quantity of stock in quality inspection in column 213, a quantity of stock in returns in column 214, a quantity of stock currently being transferred in column 215, and the like. These are just examples of the types of stocks that can be used, and others are possible.

In addition to displaying the current quantity values, the software also displays GUI elements 216 next to each of the current quantity values that are capable of transferring stock. Here, the GUI elements 216 are displayed next to the quantity values that are greater than zero. For quantity values where the current quantity is zero, the software may not display a GUI element, but instead may leave it without any GUI element. The GUI elements 216 may be displayed next to / adjacent to each of the current quantity values in the matrix 210. That is, each value may include an identical GUI element having a same image, shape, logo, design, size, color, shading, etc. similar to pieces of chess or other elements of a game.

According to various embodiments, the GUI elements 216 may be interactive. For example, a user may use an input mechanism such as a mouse or a finger to place a cursor over a GUI element corresponding to a first storage location and a first stock of material and select it (*e.g.,* click on it, hold it down, etc.), and drag it towards another GUI element on the screen corresponding to a second storage location / stock of material in the 2D matrix. When this action is detected on the user interface, the software may display a user interface with an input field that enables a user to specify a quantity amount. Once that has been input, the software may generate commands for modifying inventory based thereon. For example, the software may identify the order in which the GUI pieces are contacted by the user input and the quantity amount, and determine to send that quantity amount from the first storage location corresponding to the first piece that was moved to the second storage location corresponding to the second piece that was contacted by the first piece. This game-like movement on the user interface can cause the software to modify inventory data stored in the underlying database. The modifications may be immediate, or they may be held in a queue (similar to a shopping cart) where the user will have one more chance to validate the modifications.

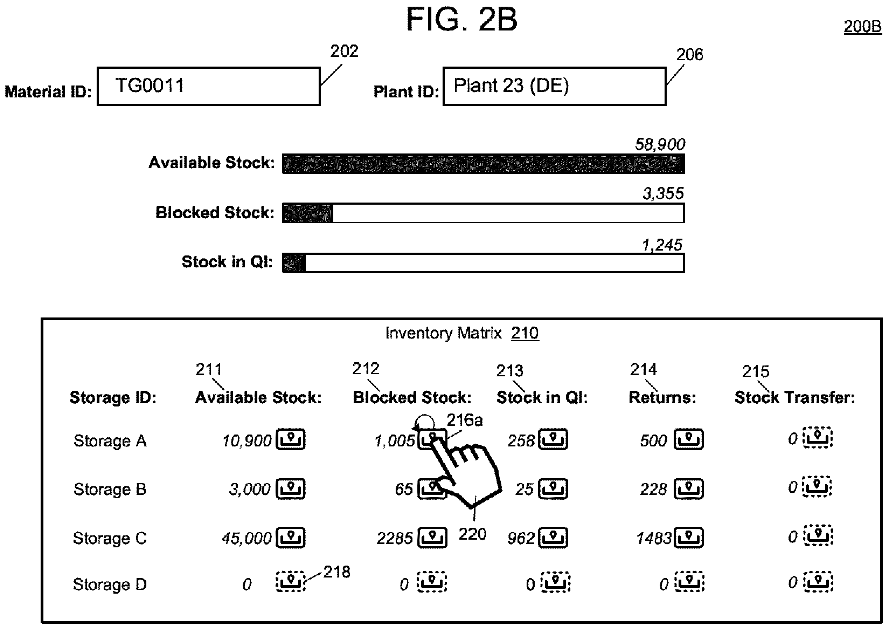

FIG. 2B illustrates a user interface 200B in which the user has moved a cursor 220 over a first GUI element 216a of a first storage location (Storage A / Blocked Stock (BS)) and selected it with an input mechanism such as a mouse, finger, etc. In response, the software may display GUI elements next to all current quantity values even those current quantity values that are zero. In this example, the software displays a second set of GUI elements 218 next to each of the current quantity values that are zero. Each of the GUI elements in the second set of GUI elements 218 may be identical to the GUI elements 216. Accordingly, the user can now interact with any of the different storage locations and different stocks of a product at a single storage location using the combined sets of GUI elements.

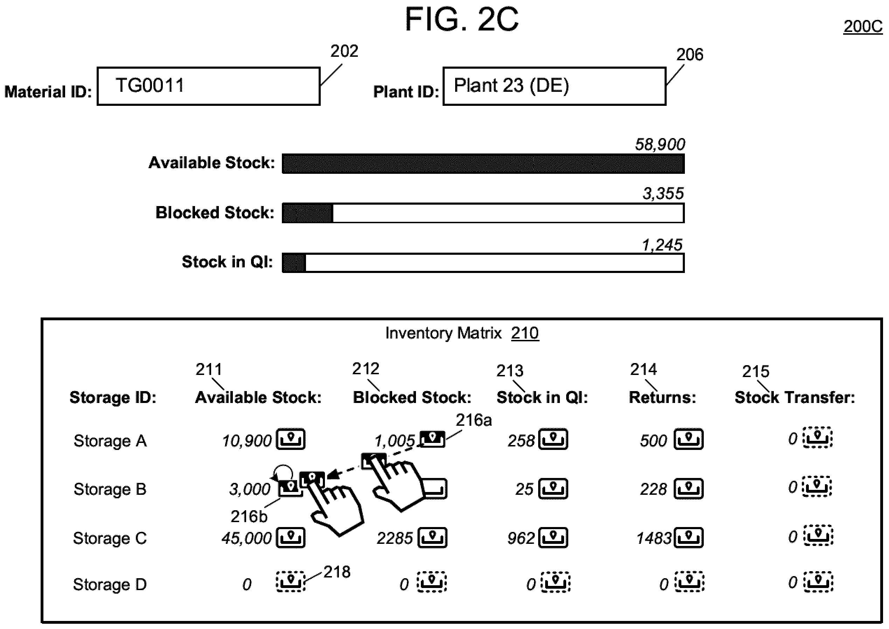

In FIG. 2C, a user interface 200C illustrates an example of a process of moving the first GUI element 216a corresponding to the first storage location toward a second GUI element 216b corresponding to a different storage location based on a user input operation. Referring to FIG. 2C, the user may select the first GUI element 216a by clicking on it once or twice. As another example, the user may select the first GUI element 216a with a click and hold operation in which the user continues to hold the selection of the first GUI element 216a using an input mechanism. In either case, the user may drag the cursor toward the second GUI element 216b of a second storage location (Storage C / Available Stock (AS)) and drop the first GUI element 216a at or near the second GUI element 216b which causes the software to generate a transfer transaction for transferring inventory from the first storage location to the second storage location. In other words, when the software detects this user input operation, the software includes logic for translating the user interface movements into database transactions that can be used to modify inventory data stored in the underlying data store / database.

In some embodiments, the user operation on the user interface may include a drag-and-drop operation but embodiments are not limited thereto. For example, the user may perform the drag operation with a finger (*e.g.,* by pressing on the screen), with a mouse (*e.g.,* manipulating a cursor on the screen) or the like. When the user selects / clicks on the first GUI element 216a and drags the first GUI element 216a towards the second GUI element 216b, the software may visually depict the first GUI element 216a moving with the touch / cursor as it moves across the screen thus providing visual proof to the user of which storage locations are involved in the transaction. Furthermore, when the user drops the first GUI element 216a at or near the second GUI element 216b, the software may detect this as a selection of the second storage location corresponding to the second GUI element 216b, and change an appearance of the second GUI element 216b when the second GUI element 216b is selected. To select the second GUI element 216b, the software may use a predetermined area around the second GUI element 216b, and require the other GUI element to be brought within that predetermined area. For example, the software may use a predetermined radius, diameter, space, etc., around the second GUI element 216b as a fence. In this case, the fence must be broken (*i.e.*, the predetermined area entered) to select the second GUI element 216b.

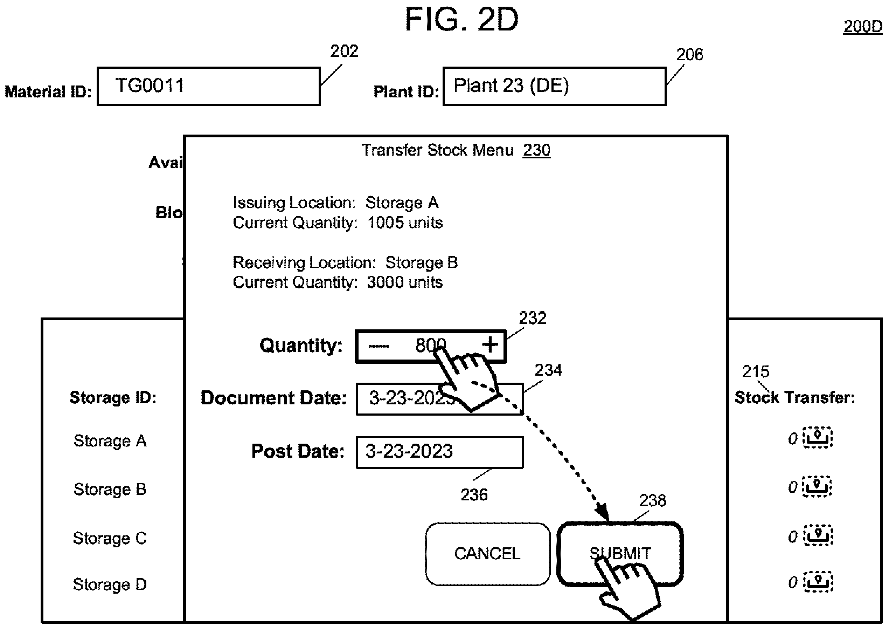

In addition, in response to detecting the user input operation in FIG. 2C, the software may also activate / display a window 230 such as a pop-up window, pop-up menu, or the like, with entry fields for the user to enter transfer data attributes into the software as shown in the example of FIG. 2D.

Referring to FIG. 2D, a user interface 200D includes the window 230 overlayed on top of the matrix 210. Furthermore, the software may disable the user interface around the window 230 and prevent any of the underlying GUI elements or other pieces from being selected while the window 230 is activated. In this example, the window 230 includes a quantity field 232, a document data field 234, and a posting date field 236, but other fields may be used. In this example, the user enters a quantity value into the quantity field 232 and presses a submit button 238 to enter the quantity value stored in the quantity field 232 into the database transaction detected from the movement of the first GUI element 216a on the user interface. The other fields may also provide information that can be used to process the database transaction including dates when the transfer should post in the future (*i.e.,* when the transfer is going to take place in the physical world).

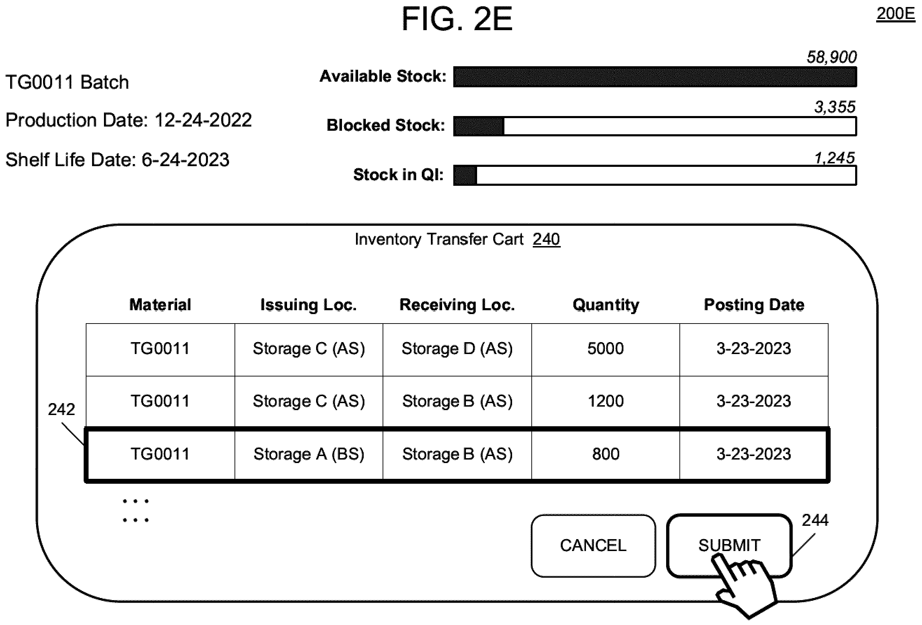

In some embodiments, the data records of the storage locations stored in the underlying database / data store may be modified automatically by the software in response to detecting the inputs of the GUI elements and the input quantity value. As another example, the software may temporarily hold the requested modifications to the storage of inventory in a queue such as a transfer cart 240 shown in FIG. 2E. Referring to FIG. 2E, a user interface 200E includes a display / view of the transfer cart 240 which includes a new entry 242 corresponding to the input movements detected on the user interface in FIG. 2C, and the quantity value entered by the user via the window 230 in FIG. 2D. The transfer cart 240 may store all of the requested modifications that occur during a web session between the front-end user and the back-end management application 250. The user may call the transfer cart 240 via a command on the user interface. As another option, the transfer cart 240 may be displayed when the user attempts to exit the management application session. To submit the transaction shown in the transfer cart 240 shown in FIG. 2E, the user may press a submit button 244. The transactions will be performed in the order that they are stored in the queue.

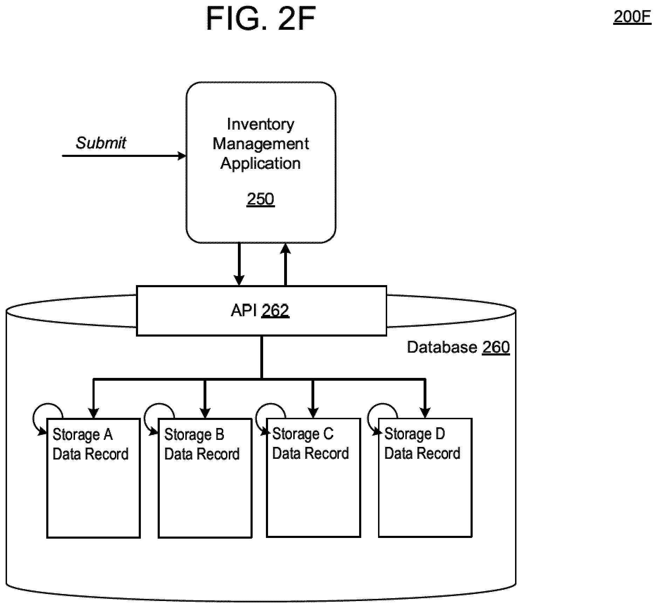

FIG. 2F illustrates a process 200F modifying data records stored in a database 260. Referring to FIG. 2F, a management application 250 may generate one or more database transactions based on inputs received from the user interfaces described herein, and submit the database transactions to the database 260. For example, the management application 250 may submit transactions that are formatted according to an application programming interface (API) 262 of the database 260. The database transactions may include SQL commands, or the like, which can read, write, delete, and insert values into data records of the storage locations (such as database tables) stored in the database 260. In response, the database 260 may return a notification to the management application 250 confirming completion / execution of the transactions on the database 260.

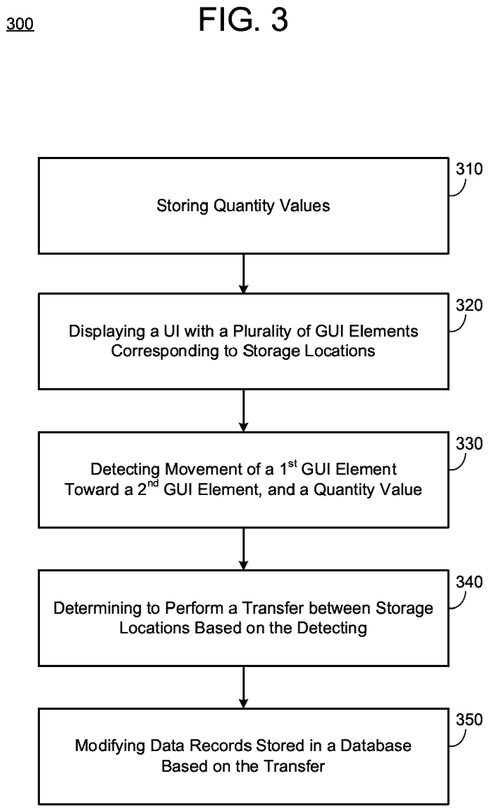

FIG. 3 illustrates a method 300 of managing inventory based on user interface interaction in accordance with an example embodiment. For example, the method 300 may be performed by a software program running on a database node, a cloud platform, a server, a computing system (user device), a combination of devices/nodes, or the like. Referring to FIG. 3, in 310 the method may include storing quantity values of a plurality of storage locations. For example, the quantity values may be stored in database records, tables, data stores, blockchain ledgers, or the like. The quantity values may identify a current quantity of an item, material, product, etc., in inventory at a storage location.

In 320, the method may include displaying a user interface that comprises a plurality of graphical user interface (GUI) elements therein corresponding to the plurality of storage locations, respectively. In 330, the method may include detecting, via the user interface, movement of a first GUI element towards a second GUI element based on inputs received on the user interface and input of a quantity value. In 340, the method may include determining to perform a transfer of the quantity value from a first storage location corresponding to the first GUI element to a second storage location corresponding to the second GUI element. In 350, the method may include modifying data records stored within a database based on the determined transfer from the first storage location to the second storage location.

In some embodiments, the method may further include requesting the quantity value via the user interface when the first GUI element is brought within a predetermined radius of the second GUI element within the user interface. In some embodiments, when initially displayed, the plurality of GUI elements may be identical in appearance, and the method further include changing an appearance of the first GUI element in response to detecting a selection of the first GUI element via the user interface. In some embodiments, the detecting may include detecting a drag-and-drop command via a cursor which drags the first GUI element towards the second GUI element within the user interface.

In some embodiments, the method may further include displaying the first GUI element moving with the cursor while the cursor moves towards the second GUI element within the user interface. In some embodiments, the method may further include detecting a press of a scan button on the user interface, and in response, reading current quantity values of the plurality of storage locations from the database and displaying the plurality of current quantity values next to the plurality of GUI elements within the user interface, respectively. In some embodiments, the method may further include displaying a pop-up window with an input field, in response to detecting the inputs, and receiving the input quantity value via the input field in the displayed pop-up window. In some embodiments, the modifying may include executing a database transaction via an application programming interface (API) of a database to modify the data records stored within the database.

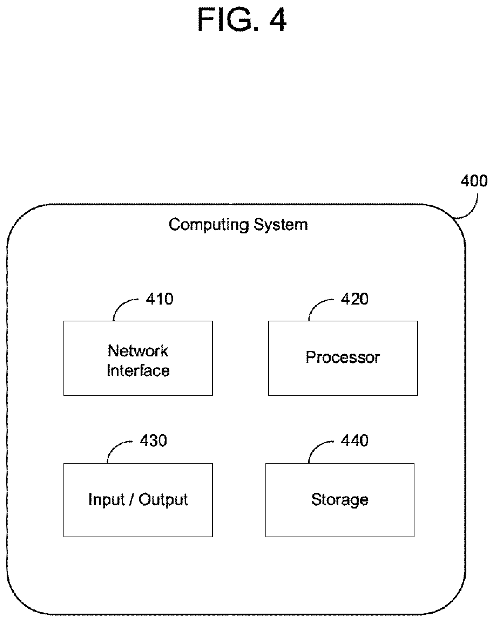

FIG. 4 illustrates a computing system 400 that may be used in any of the methods and processes described herein, in accordance with an example embodiment. For example, the computing system 400 may be a database node, a server, a cloud platform, or the like. In some embodiments, the computing system 400 may be distributed across multiple computing devices such as multiple database nodes.

Referring to FIG. 4, the computing system 400 includes a network interface 410, a processor 420, an input / output 430, and a storage 440 such as an in-memory storage, and the like. Although not shown in FIG. 4, the computing system 400 may also include or be electronically connected to other components such as a microphone, a display, an input unit(s), a receiver, a transmitter, a persistent disk, and the like. The processor 420 may control or replace any of the other components of the computing system 400.

According to various embodiments, the processor 420 may output a user interface to a local display or to a display of a remotely-connected device (e.g., via the network interface 410), which includes a user interface for inventory management as described in the example embodiments. The processor 420 may perform any of the method steps and processes described herein and any steps that would be reasonably understood to be performed with the steps and process not specifically mentioned such as generating API calls, generating SQL queries, database management services, and the like.

The network interface 410 may transmit and receive data over a network such as the Internet, a private network, a public network, an enterprise network, and the like. The network interface 410 may be a wireless radio interface, a wired interface such as a network card, a satellite communication interface, or a combination thereof. The processor 420 may include one or more processing devices each including one or more processing cores. In some examples, the processor 420 is a multicore processor or a plurality of multicore processors. Also, the processor 420 may be fixed or it may be reconfigurable. The input / output 430 may include an interface, a port, a cable, a bus, a board, a wire, and the like, for inputting and outputting data to and from the computing system 400. For example, data may be output to an embedded display of the computing system 400, an externally connected display, a display connected to the cloud, another device, and the like. The network interface 410, the input / output 430, the storage 440, or a combination thereof, may interact with applications executing on other devices.

The storage 440 is not limited to a particular storage device and may include any known memory device such as RAM, ROM, hard disk, and the like, and may or may not be included within a database system, a cloud environment, a web server, or the like. The storage 440 may store software modules or other non-transitory instructions which can be executed by the processor 420 to perform the methods and processes described herein. The storage 440 may include a data store having a plurality of tables, partitions and sub-partitions. The storage 440 may be used to store database records, items, entries, and the like. Also, the storage 440 may be queried using SQL commands.

According to various embodiments, the storage 440 may store quantity values of a plurality of storage locations. For example, the storage 440 may include a database such as a relational database or the like. The quantity values may be stored in data records such as database tables, topics, or the like. The processor 420 may display a user interface that comprises a plurality of graphical user interface (GUI) elements therein corresponding to the plurality of storage locations, respectively. Furthermore, the processor 420 may detect, via the user interface, movement of a first GUI element towards a second GUI element based on inputs received on the user interface. In this example, the processor 420 may determine to perform a transfer operation from a first storage location corresponding to the first GUI element to a second storage location corresponding to the second GUI element. The processor 420 may receive a quantity value via the user interface, and may modify data records stored within a database based on the determined transfer operation and the quantity value from the first storage location to the second storage location.

As will be appreciated based on the foregoing specification, the above-described examples of the disclosure may be implemented using computer programming or engineering techniques including computer software, firmware, hardware or any combination or subset thereof. Any such resulting program, having computer-readable code, may be embodied or provided within one or more non- transitory computer-readable media, thereby making a computer program product, i.e., an article of manufacture, according to the discussed examples of the disclosure. For example, the non-transitory computer-readable media may be, but is not limited to, a fixed drive, diskette, optical disk, magnetic tape, flash memory, external drive, semiconductor memory such as read-only memory (ROM), random-access memory (RAM), and the like.

The computer programs (also referred to as programs, software, software applications, "apps", or code) may include machine instructions for a programmable processor, and may be implemented in a high-level procedural and/or object-oriented programming language, and/or in assembly/machine language. As used herein, the terms "machine-readable medium" and "computer-readable medium" refer to any computer program product, apparatus, cloud storage, internet of things, and/or device (e.g., magnetic discs, optical disks, memory, programmable logic devices (PLDs)) used to provide machine instructions and/or data to a programmable processor, including a machine-readable medium that receives machine instructions as a machine-readable signal. The "machine-readable medium" and "computer-readable medium," however, do not include transitory signals. The term "machine-readable signal" refers to any signal that may be used to provide machine instructions and/or any other kind of data to a programmable processor.

The above descriptions and illustrations of processes herein should not be considered to imply a fixed order for performing the process steps. Rather, the process steps may be performed in any order that is practicable, including simultaneous performance of at least some steps. Although the disclosure has been described in connection with specific examples, it should be understood that various changes, substitutions, and alterations apparent to those skilled in the art can be made to the disclosed embodiments without departing from the scope of the disclosure as set forth in the appended claims.

Provided are systems and methods for managing inventory among a plurality of storage locations via a user interface that includes movable interactive GUI elements corresponding to the storage locations. In one example, a method may include displaying a user interface that comprises a plurality of GUI elements therein corresponding to the plurality of storage locations, respectively, detecting, via the user interface, movement of a first GUI element towards a second GUI element based on inputs received on the user interface and input of a quantity value, determining to perform a transfer of a quantity value from a first storage location corresponding to the first GUI element to a second storage location corresponding to the second GUI element, and modifying data records stored within a database based on the determined transfer from the first storage location to the second storage location.

## Claims

1. A computing system for managing an inventory, the computing system comprising:
a storage (126) configured to store quantity values of a plurality of storage locations, the plurality of storage locations storing the inventory; and
a processor configured to
display (320) a user interface that comprises a plurality of graphical user interface (GUI) elements therein corresponding to the plurality of storage locations, respectively,
detect (330), via the user interface, movement of a first GUI element towards a second GUI element based on inputs received on the user interface,
determine (340) to perform a transfer operation from a first storage location corresponding to the first GUI element to a second storage location corresponding to the second GUI element, the second storage location being different from the first storage location,
detect a press of a scan button (204) on the user interface,
in response to the press of the scan button (240) on the user interface, read current quantity values of the plurality of storage locations from a database and display the current quantity values next to the plurality of GUI elements corresponding to the plurality of storage locations within the user interface,
receive (330) a quantity value via the user interface, and
modify (350) data records stored within the database based on the determined transfer operation and the quantity value from the first storage location to the second storage location.

2. The computing system of claim 1, wherein the processor is further configured to
receive scan criteria via the user interface,
based on the received scan criteria, query the database to obtain the current quantity values, wherein the current quantity values match the received scan criteria.

3. The computing system of any of the preceding claims, wherein the processor is further configured to request an input quantity via the user interface when the first GUI element is brought within a predetermined radius of the second GUI element within the user interface.

4. The computing system of any of the preceding claims, wherein, when initially displayed, the plurality of GUI elements are identical in appearance, and the processor is further configured to change an appearance of the first GUI element in response to detecting a selection of the first GUI element via the user interface.

5. The computing system of any of the preceding claims, wherein the processor is configured to detect a drag-and-drop command via a cursor which drags the first GUI element towards the second GUI element within the user interface.

6. The computing system of claim 5, wherein the processor is further configured to display the first GUI element moving with the cursor while the cursor moves towards the second GUI element within the user interface.

7. The computing system of any of the preceding claims, wherein the processor is further configured to display a pop-up window with an input field, in response to detecting the inputs, and receive the input quantity value via the input field in the displayed pop-up window.

8. The computing system of any of the preceding claims, wherein the processor is configured to execute a database transaction via an application programming interface (API) of a database to modify the data records stored within the database.

9. A method of managing an inventory, the method comprising:
storing quantity values of a plurality of storage locations, the plurality of storage locations storing the inventory;
displaying (320) a user interface that comprises a plurality of graphical user interface (GUI) elements therein corresponding to the plurality of storage locations, respectively;
detecting (330), via the user interface, movement of a first GUI element towards a second GUI element based on inputs received on the user interface;
detecting a press of a scan button (204) on the user interface;
in response to the press of the scan button (204) on the user interface, reading current quantity values of the plurality of storage locations from a database and displaying the current quantity values next to the plurality of GUI elements corresponding to the plurality of storage locations within the user interface;
receiving (330) an input of a quantity value via the user interface;
determining (340) to perform a transfer of the quantity value from a first storage location corresponding to the first GUI element to a second storage location corresponding to the second GUI element, the second storage location being different from the first storage location; and
modifying (350) data records stored within the database based on the determined transfer from the first storage location to the second storage location.

10. The method of claim 9, wherein the method further comprises
receiving scan criteria via the user interface,
based on the received scan criteria, querying the database to obtain the current quantity values, wherein the current quantity values match the received scan criteria.

11. The method of any of claims 9 and 10, wherein the method further comprises requesting the quantity value via the user interface when the first GUI element is brought within a predetermined radius of the second GUI element within the user interface.

12. The method of any of claims 9-11, wherein the detecting comprise detecting a drag-and-drop command via a cursor which drags the first GUI element towards the second GUI element within the user interface.

13. The method of claim 12, wherein the method further comprises displaying the first GUI element moving with the cursor while the cursor moves towards the second GUI element within the user interface.

14. A computer-readable medium comprising instructions which when executed by a processor cause a computer to perform a method of managing an inventory, the method comprising:
displaying (320) a user interface that comprises a plurality of movable pieces corresponding to a plurality of storage locations, the plurality of storage locations storing the inventory, respectively;
detecting (330), via the user interface, movement of a first movable piece towards a second movable piece based on inputs received on the user interface;
detecting a press of a scan button (204) on the user interface;
in response to the press of the scan button (204) on the user interface, reading current quantity values of the plurality of storage locations from a database and displaying the current quantity values next to the plurality of movable pieces corresponding to the plurality of storage locations within the user interface;
receiving (330) an input of a quantity value via the user interface;
determining (340) to transfer the quantity value from a first storage location corresponding to the first movable piece within the user interface to a second storage location corresponding to the second movable piece within the user interface based on the detected movements and the received quantity value, the second storage location being different from the first storage location; and
modifying (350) data records stored within the database based on the determination.

15. A computer program comprising instructions which, when the program is executed by a computer, cause the computer to carry out the method of any of the claims 9 to 13.

## Patentansprüche

1. Rechensystem zum Verwalten eines Bestands, wobei das Rechensystem umfasst:
einen Speicher (126), der dazu ausgelegt ist, Mengenwerte einer Vielzahl von Speicherorten zu speichern, wobei die Vielzahl von Speicherorten den Bestand speichern; und
einen Prozessor, der ausgelegt ist zum
Anzeigen (320) einer Benutzerschnittstelle, die darin eine Vielzahl von Elementen einer grafischen Benutzerschnittstelle (GUI), die jeweils der Vielzahl von Speicherorten entsprechen, umfasst,
Detektieren (330), über die Benutzerschnittstelle, einer Bewegung eines ersten GUI-Elements in Richtung eines zweiten GUI-Elements basierend auf Eingaben, die auf der Benutzerschnittstelle empfangen werden,
Bestimmen (340), eine Übertragungsoperation von einem ersten Speicherort, der dem ersten GUI-Element entspricht, zu einem zweiten Speicherort, der dem zweiten GUI-Element entspricht, durchzuführen, wobei sich der zweite Speicherort vom ersten Speicherort unterscheidet, Detektieren eines Drückens einer Scan-Schaltfläche (204) auf der Benutzerschnittstelle,
als Reaktion auf das Drücken der Scan-Schaltfläche (240) auf der Benutzerschnittstelle, Lesen aktueller Mengenwerte der Vielzahl von Speicherorten aus einer Datenbank und Anzeigen der aktuellen Mengenwerte neben der Vielzahl von GUI-Elementen, die der Vielzahl von Speicherorten innerhalb der Benutzerschnittstelle entsprechen,
Empfangen (330) eines Mengenwerts über die Benutzerschnittstelle und
Modifizieren (350) von Datensätzen, die innerhalb der Datenbank gespeichert sind, basierend auf der bestimmten Übertragungsoperation und dem Mengenwert vom ersten Speicherort zum zweiten Speicherort.

2. Rechensystem nach Anspruch 1, wobei der Prozessor ferner ausgelegt ist zum
Empfangen von Scan-Kriterien über die Benutzerschnittstelle,
basierend auf den empfangenen Scan-Kriterien, Abfragen der Datenbank, um die aktuellen Mengenwerte zu erhalten, wobei die aktuellen Mengenwerte mit den empfangenen Scan-Kriterien übereinstimmen.

3. Rechensystem nach einem der vorhergehenden Ansprüche, wobei der Prozessor ferner dazu ausgelegt ist, eine Eingabemenge über die Benutzerschnittstelle anzufordern, wenn das erste GUI-Element innerhalb eines vorbestimmten Radius des zweiten GUI-Elements innerhalb der Benutzerschnittstelle gebracht wird.

4. Rechensystem nach einem der vorhergehenden Ansprüche, wobei, wenn anfänglich angezeigt, die Vielzahl von GUI-Elementen im Erscheinungsbild identisch sind und der Prozessor ferner dazu ausgelegt ist, ein Erscheinungsbild des ersten GUI-Elements als Reaktion auf das Detektieren einer Auswahl des ersten GUI-Elements über die Benutzerschnittstelle zu ändern.

5. Rechensystem nach einem der vorhergehenden Ansprüche, wobei der Prozessor dazu ausgelegt ist, einen Drag-and-Drop-Befehl über einen Cursor, der das erste GUI-Element in Richtung des zweiten GUI-Elements innerhalb der Benutzerschnittstelle zieht, zu detektieren.

6. Rechensystem nach Anspruch 5, wobei der Prozessor ferner dazu ausgelegt ist, das erste GUI-Element anzuzeigen, das sich mit dem Cursor bewegt, während sich der Cursor in Richtung des zweiten GUI-Elements innerhalb der Benutzerschnittstelle bewegt.

7. Rechensystem nach einem der vorhergehenden Ansprüche, wobei der Prozessor ferner dazu ausgelegt ist, als Reaktion auf das Detektieren der Eingaben ein Popup-Fenster mit einem Eingabefeld anzuzeigen und den Eingabemengenwert über das Eingabefeld im angezeigten Popup-Fenster zu empfangen.

8. Rechensystem nach einem der vorhergehenden Ansprüche, wobei der Prozessor dazu ausgelegt ist, eine Datenbanktransaktion über eine Programmierschnittstelle (API) einer Datenbank auszuführen, um die innerhalb der Datenbank gespeicherten Datensätze zu modifizieren.

9. Verfahren zum Verwalten eines Bestands, wobei das Verfahren umfasst:
Speichern von Mengenwerten einer Vielzahl von Speicherorten, wobei die Vielzahl von Speicherorten den Bestand speichern;
Anzeigen (320) einer Benutzerschnittstelle, die darin eine Vielzahl von Elementen einer grafischen Benutzerschnittstelle (GUI), die jeweils den Vielzahl von Speicherorten entsprechen, umfasst;
Detektieren (330), über die Benutzerschnittstelle, einer Bewegung eines ersten GUI-Elements in Richtung eines zweiten GUI-Elements basierend auf Eingaben, die auf der Benutzerschnittstelle empfangen werden;
Detektieren eines Drückens einer Scan-Schaltfläche (204) auf der Benutzerschnittstelle;
als Reaktion auf das Drücken der Scan-Schaltfläche (204) auf der Benutzerschnittstelle, Lesen aktueller Mengenwerte der Vielzahl von Speicherorten aus einer Datenbank und Anzeigen der aktuellen Mengenwerte neben der Vielzahl von GUI-Elementen, die der Vielzahl von Speicherorten innerhalb der Benutzerschnittstelle entsprechen;
Empfangen (330) einer Eingabe eines Mengenwerts über die Benutzerschnittstelle;
Bestimmen (340), eine Übertragung des Mengenwerts von einem ersten Speicherort, der dem ersten GUI-Element entspricht, zu einem zweiten Speicherort, der dem zweiten GUI-Element entspricht, durchzuführen, wobei sich der zweite Speicherort vom ersten Speicherort unterscheidet; und
Modifizieren (350) von Datensätzen, die innerhalb der Datenbank gespeichert sind, basierend auf der bestimmten Übertragung vom ersten Speicherort zum zweiten Speicherort.

10. Verfahren nach Anspruch 9, wobei das Verfahren ferner umfasst
Empfangen von Scan-Kriterien über die Benutzerschnittstelle,
basierend auf den empfangenen Scan-Kriterien, Abfragen der Datenbank, um die aktuellen Mengenwerte zu erhalten, wobei die aktuellen Mengenwerte mit den empfangenen Scan-Kriterien übereinstimmen.

11. Verfahren nach einem der Ansprüche 9 und 10, wobei das Verfahren ferner ein Anfordern des Mengenwerts über die Benutzerschnittstelle umfasst, wenn das erste GUI-Element innerhalb eines vorbestimmten Radius des zweiten GUI-Elements innerhalb der Benutzerschnittstelle gebracht wird.

12. Verfahren nach einem der Ansprüche 9 bis 11, wobei das Detektieren ein Detektieren eines Drag-and-Drop-Befehls über einen Cursor, der das erste GUI-Element in Richtung des zweiten GUI-Elements innerhalb der Benutzerschnittstelle zieht, umfasst.

13. Verfahren nach Anspruch 12, wobei das Verfahren ferner ein Anzeigen des ersten GUI-Elements, das sich mit dem Cursor bewegt, während sich der Cursor in Richtung des zweiten GUI-Elements innerhalb der Benutzerschnittstelle bewegt, umfasst.

14. Computerlesbares Medium, das Anweisungen umfasst, die, wenn sie durch einen Prozessor ausgeführt werden, einen Computer veranlassen, ein Verfahren zum Verwalten eines Bestands durchzuführen, wobei das Verfahren umfasst:
Anzeigen (320) einer Benutzerschnittstelle, die eine Vielzahl beweglicher Teile umfasst, die einer Vielzahl von Speicherorten entsprechen, wobei die Vielzahl von Speicherorten jeweils den Bestand speichern;
Detektieren (330), über die Benutzerschnittstelle, einer Bewegung eines ersten beweglichen Teils in Richtung eines zweiten beweglichen Teils basierend auf Eingaben, die auf der Benutzerschnittstelle empfangen werden;
Detektieren eines Drückens einer Scan-Schaltfläche (204) auf der Benutzerschnittstelle;
als Reaktion auf das Drücken der Scan-Schaltfläche (204) auf der Benutzerschnittstelle, Lesen aktueller Mengenwerte der Vielzahl von Speicherorten aus einer Datenbank und Anzeigen der aktuellen Mengenwerte neben der Vielzahl beweglicher Teile, die der Vielzahl von Speicherorten innerhalb der Benutzerschnittstelle entsprechen;
Empfangen (330) einer Eingabe eines Mengenwerts über die Benutzerschnittstelle;
Bestimmen (340), den Mengenwert von einem ersten Speicherort, der dem ersten beweglichen Teil innerhalb der Benutzerschnittstelle entspricht, zu einem zweiten Speicherort, der dem zweiten beweglichen Teil innerhalb der Benutzerschnittstelle entspricht, basierend auf den detektierten Bewegungen und dem empfangenen Mengenwert zu übertragen, wobei sich der zweite Speicherort vom ersten Speicherort unterscheidet; und
Modifizieren (350) von Datensätzen, die innerhalb der Datenbank gespeichert sind, basierend auf der Bestimmung.

15. Computerprogramm, das Anweisungen umfasst, die, wenn das Programm durch einen Computer ausgeführt wird, den Computer veranlassen, das Verfahren nach einem der Ansprüche 9 bis 13 auszuführen.

## Revendications

1. Système informatique de gestion de stocks, le système informatique comprenant :
une mémoire (126) configurée pour stocker des valeurs de quantité d'une pluralité d'emplacements de stockage, la pluralité d'emplacements de stockage emmagasinant les stocks ; et
un processeur configuré pour
afficher (320) une interface d'utilisateur qui comprend une pluralité d'éléments d'interface graphique (GUI) correspondant respectivement à la pluralité d'emplacements de stockage,
détecter (330), par l'intermédiaire de l'interface d'utilisateur, un mouvement d'un premier élément de GUI vers un deuxième élément de GUI d'après des entrées reçues sur l'interface d'utilisateur,
déterminer (340) qu'il convient d'effectuer une opération de transfert d'un premier emplacement de stockage correspondant au premier élément de GUI vers un deuxième emplacement de stockage correspondant au deuxième élément de GUI, le deuxième emplacement de stockage étant différent du premier emplacement de stockage,
détecter un appui sur un bouton (204) de balayage sur l'interface d'utilisateur,
en réponse à l'appui sur le bouton de balayage (240) sur l'interface d'utilisateur, lire les valeurs de quantité actuelles de la pluralité d'emplacements de stockage à partir d'une base de données et afficher les valeurs de quantité actuelles à côté de la pluralité d'éléments de GUI correspondant à la pluralité d'emplacements de stockage à l'intérieur de l'interface d'utilisateur,
recevoir (330) une valeur de quantité par l'intermédiaire de l'interface d'utilisateur, et
modifier (350) des enregistrements de données stockés dans la base de données en fonction de l'opération de transfert déterminée et de la valeur de quantité du premier emplacement de stockage au deuxième emplacement de stockage.

2. Système informatique selon la revendication 1, le processeur étant en outre configuré pour
recevoir des critères de balayage par l'intermédiaire de l'interface d'utilisateur,
sur la base des critères de balayage reçus, interrogez la base de données pour obtenir les valeurs de quantité actuelles, les valeurs de quantité actuelles correspondant aux critères de balayage reçus.

3. Système informatique selon l'une quelconque des revendications précédentes, dans lequel le processeur est en outre configuré pour demander une quantité d'entrée par l'intermédiaire de l'interface d'utilisateur lorsque le premier élément de GUI est amené dans un rayon prédéterminé du deuxième élément de GUI à l'intérieur de l'interface d'utilisateur.

4. Système informatique selon l'une quelconque des revendications précédentes, dans lequel, lorsqu'ils sont initialement affichés, la pluralité d'éléments de GUI ont une apparence identique, et le processeur est en outre configuré pour changer une apparence du premier élément de GUI en réponse à la détection d'une sélection du premier élément de GUI par l'intermédiaire de l'interface d'utilisateur.

5. Système informatique selon l'une quelconque des revendications précédentes, dans lequel le processeur est configuré pour détecter une commande de glisser-déposer par l'intermédiaire d'un curseur qui fait glisser le premier élément de GUI vers le deuxième élément de GUI à l'intérieur de l'interface d'utilisateur.

6. Système informatique selon la revendication 5, dans lequel le processeur est en outre configuré pour afficher le premier élément de GUI se déplaçant avec le curseur tandis que le curseur se déplace vers le deuxième élément de GUI à l'intérieur de l'interface d'utilisateur.

7. Système informatique selon l'une quelconque des revendications précédentes, dans lequel le processeur est en outre configuré pour afficher une fenêtre contextuelle avec un champ d'entrée, en réponse à la détection des entrées, et recevoir la valeur de quantité d'entrée par l'intermédiaire du champ d'entrée dans la fenêtre contextuelle affichée.

8. Système informatique selon l'une quelconque des revendications précédentes, dans lequel le processeur est configuré pour exécuter une transaction de base de données via une interface de programmation d'application (API) d'une base de données pour modifier les enregistrements de données stockés dans la base de données.

9. Procédé de gestion de stocks, le procédé comprenant :
le stockage de valeurs de quantité d'une pluralité d'emplacements de stockage, la pluralité d'emplacements de stockage emmagasinant les stocks ;
l'affichage (320) d'une interface d'utilisateur comprenant une pluralité d'éléments d'interface graphique (GUI) correspondant respectivement à la pluralité d'emplacements de stockage ;
la détection (330), par l'interface d'utilisateur, d'un mouvement d'un premier élément de GUI vers un deuxième élément de GUI sur la base d'entrées reçues sur l'interface d'utilisateur ;
la détection d'un appui sur un bouton (204) de balayage sur l'interface d'utilisateur ;
en réponse à l'appui sur le bouton (204) de balayage sur l'interface d'utilisateur, la lecture de valeurs de quantité actuelles de la pluralité d'emplacements de stockage à partir d'une base de données et l'affichage des valeurs de quantité actuelles à côté de la pluralité d'éléments de GUI correspondant à la pluralité d'emplacements de stockage à l'intérieur de l'interface d'utilisateur ;
la réception (330) d'une entrée d'une valeur de quantité par l'intermédiaire de l'interface d'utilisateur ;
la détermination (340) du fait qu'il convient d'effectuer un transfert de la valeur de quantité d'un premier emplacement de stockage correspondant au premier élément de GUI vers un deuxième emplacement de stockage correspondant au deuxième élément de GUI, le deuxième emplacement de stockage étant différent du premier emplacement de stockage ; et
la modification (350) d'enregistrements de données stockés dans la base de données sur la base du transfert déterminé du premier emplacement de stockage au deuxième emplacement de stockage.

10. Procédé selon la revendication 9, le procédé comprenant en outre
la réception de critères de balayage par l'intermédiaire de l'interface d'utilisateur,
sur la base des critères de balayage reçus, l'interrogation de la base de données pour obtenir les valeurs de quantité actuelles, les valeurs de quantité actuelles correspondant aux critères de balayage reçus.

11. Procédé selon l'une quelconque des revendications 9 et 10, le procédé comprenant en outre le fait de demander la valeur de quantité par l'intermédiaire de l'interface d'utilisateur lorsque le premier élément de GUI est amené à l'intérieur d'un rayon prédéterminé du deuxième élément de GUI à l'intérieur de l'interface d'utilisateur.

12. Procédé selon l'une quelconque des revendications 9 à 11, la détection comprenant la détection d'une commande de glisser-déposer par l'intermédiaire d'un curseur qui fait glisser le premier élément de GUI vers le deuxième élément de GUI à l'intérieur de l'interface d'utilisateur.

13. Procédé selon la revendication 12, le procédé comprenant en outre l'affichage du premier élément de GUI se déplaçant avec le curseur tandis que le curseur se déplace vers le deuxième élément de GUI à l'intérieur de l'interface d'utilisateur.

14. Support lisible par ordinateur comprenant des instructions qui, lorsqu'elles sont exécutées par un processeur, amènent un ordinateur à réaliser un procédé de gestion de stocks, le procédé comprenant :
l'affichage (320) d'une interface d'utilisateur qui comprend une pluralité de pièces mobiles correspondant respectivement à une pluralité d'emplacements de stockage, la pluralité d'emplacements de stockage emmagasinant les stocks ;
la détection (330), par l'interface d'utilisateur, d'un mouvement d'une première pièce mobile vers une deuxième pièce mobile à partir d'entrées reçues sur l'interface d'utilisateur ;
la détection d'un appui sur un bouton (204) de balayage sur l'interface d'utilisateur ;
en réponse à l'appui sur le bouton (204) de balayage sur l'interface d'utilisateur, la lecture de valeurs de quantité actuelles de la pluralité d'emplacements de stockage dans une base de données et l'affichage des valeurs de quantité actuelles à côté de la pluralité de pièces mobiles correspondant à la pluralité d'emplacements de stockage à l'intérieur de l'interface d'utilisateur ;
la réception (330) d'une entrée d'une valeur de quantité par l'intermédiaire de l'interface d'utilisateur ;
la détermination (340) du fait qu'il convient de transférer la valeur de quantité d'un premier emplacement de stockage correspondant à la première pièce mobile à l'intérieur de l'interface d'utilisateur à un deuxième emplacement de stockage correspondant à la deuxième pièce mobile à l'intérieur de l'interface d'utilisateur sur la base des mouvements détectés et de la valeur de quantité reçue, le deuxième emplacement de stockage étant différent du premier emplacement de stockage ; et
la modification (350) d'enregistrements de données stockés dans la base de données en fonction de la détermination.

15. Programme informatique comprenant des instructions qui, lorsque le programme est exécuté par un ordinateur, amènent l'ordinateur à réaliser le procédé selon l'une quelconque des revendications 9 à 13.
